(19)

Europäisches
Patentamt
European
Patent Office
Office européen
des brevets

(11) **EP 2 830 377 A1**

(12) **EUROPEAN PATENT APPLICATION**
published in accordance with Art. 153(4) EPC

(43) Date of publication:
    **28.01.2015 Bulletin 2015/05**

(51) Int Cl.:
    **H04W 72/04** *(2009.01)*    **H04W 72/12** *(2009.01)*

(21) Application number: **13764691.5**

(86) International application number:
    **PCT/JP2013/057695**

(22) Date of filing: **18.03.2013**

(87) International publication number:
    **WO 2013/141214 (26.09.2013 Gazette 2013/39)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority:   **19.03.2012   JP 2012062822**

(71) Applicant: **NTT DOCOMO, INC.**
    **Chiyoda-ku**
    **Tokyo 100-6150 (JP)**

(72) Inventors:
    • **TAKEDA, Kazuaki**
      **Tokyo 100-6150 (JP)**
    • **NAGATA, Satoshi**
      **Tokyo 100-6150 (JP)**
    • **KISHIYAMA, Yoshihisa**
      **Tokyo 100-6150 (JP)**
    • **LIU, Liu**
      **Beijing 100190 (CN)**
    • **CHEN, Lan**
      **Beijing 100190 (CN)**

(74) Representative: **Hoffmann Eitle**
    **Patent- und Rechtsanwälte PartmbB**
    **Arabellastraße 30**
    **81925 München (DE)**

(54) **WIRELESS COMMUNICATIONS SYSTEM, WIRELESS BASE STATION DEVICE, USER TERMINAL, AND WIRELESS RESOURCE ALLOCATION METHOD**

(57)    The present invention is designed to provide a radio communication system, a radio base station apparatus, a user terminal and a radio resource allocation method that cope with the increase of the number of users. A radio base station apparatus is provided with a scheduling section (310) that selects a radio resource for a PUCCH corresponding to a PDCCH that is multiplexed over a control region in a subframe and an enhanced PDCCH that is frequency-division-multiplexed with a downlink data signal over a data region in the subframe, and a transmission section that transmits a PDCCH signal and an enhanced PDCCH signal to a user terminal with information that can identify the radio resource for the PUCCH selected in this scheduling section (310). The scheduling section (310) selects a radio resource that does not overlap with the radio resource for the PUCCH corresponding to the PDCCH signal, as the radio resource for the PUCCH corresponding to the enhanced PDCCH signal.

FIG.15

**Description**

Technical Field

The present invention relates to a radio communication system, a radio base station apparatus, a user terminal and a radio resource allocation method in a next-generation radio communication system.

Background Art

In a UMTS (Universal Mobile Telecommunications System) network, long-term evolution (LTE) is under study for the purposes of further increasing high-speed data rates, providing low delay, and so on (non-patent literature 1). In LTE, as multiple access schemes, a scheme that is based on OFDMA (Orthogonal Frequency Division Multiple Access) is used on downlink channels (downlink), and a scheme that is based on SC-FDMA (Single Carrier Frequency Division Multiple Access) is used on uplink channels (uplink).

Also, successor systems of LTE (referred to as, for example, "LTE-Advanced" or "LTE enhancement" (hereinafter referred to as "LTE-A")) are under study for the purposes of further broadbandization and increased speed beyond LTE. In LTE (Rel. 8) and LTE-A (Rel. 9 and Rel. 10), MIMO (Multi Input Multi Output) techniques are under study as radio communication techniques to transmit and receive data with a plurality of antennas and improve spectral efficiency. In a MIMO system, a plurality of transmitting/receiving antennas are provided in the transmitter/receiver, so that different transmission information sequences are transmitted from different transmitting antennas at the same time.

Citation List

Non-Patent Literature

Non-Patent Literature 1: 3GPP TR 25.913 "Requirements for Evolved UTRA and Evolved UTRAN"

Summary of Invention

Technical Problem

Now, successor systems of LTE (for example, Rel. 9 and Rel. 10) provide for multiple-user MIMO (MU-MIMO) to transmit transmission information sequences from different transmitting antennas, to different users, at the same time. This MU-MIMO transmission is also studied for application to a Hetnet (Heterogeneous network) and CoMP (Coordinated Multi-Point) transmission. Consequently, in future systems, the number of users to be connected to a base station apparatus is expected to increase, and there is a threat that conventional radio resource allocation methods will be unable to optimize the performance of future systems such as MU-MIMO transmission.

The present invention has been made in view of the above, and it is therefore an object of the present invention to provide a radio communication system, a radio base station apparatus, a user terminal and a radio resource allocation method to cope with the increase of the number of users.

Solution to Problem

The radio communication system of the present invention has: a radio base station apparatus which has: a selection section that selects radio resources for uplink control signals corresponding to a first downlink control signal that is multiplexed over a control region in a subframe and a second downlink control signal that is frequency-division-multiplexed with a downlink data signal over a data region in the subframe; and a transmission section that transmits the first and second downlink control signals to a user terminal with information that can identify the radio resources for the uplink control signals selected in the selection section; and a user terminal which has: a receiving section that receives the first and second downlink control signals and the information that can identify the radio resources for the uplink control signals; a demodulation section that demodulates the first and second downlink control signals received in the receiving section; and a transmission section that transmits the uplink control signals to the radio base station apparatus using radio resources that can be determined from the information that can identify the radio resources for the uplink control signals, and, in this radio communication system, the selection section selects a radio resource that does not overlap with a radio resource for an uplink control signal corresponding to the first downlink control signal, as a radio resource for an uplink control signal corresponding to the second downlink control signal.

The radio base station apparatus of the present invention has: a selection section that selects radio resources for uplink control signals corresponding to a first downlink control signal that is multiplexed over a control region in a subframe and a second downlink control signal that is frequency-division-multiplexed with a downlink data signal over a data region in the subframe; and a transmission section that transmits the first and second downlink control signals to a user terminal with information that can identify the radio resources for the uplink control signals selected in the selection section, and, in this radio base station apparatus, the selection section selects a radio resource that does not overlap with a radio resource for an uplink control signal corresponding to the first downlink control signal, as a radio resource for an uplink control signal corresponding to the second downlink control signal.

The user terminal of the present invention has: a receiving section that receives a first downlink control signal that is multiplexed over a control region in a subframe and a second downlink control signal that is frequency-division-multiplexed with a downlink data signal over a data region in the subframe, and information that can identify radio resources for uplink control signals corresponding to the first and second control signals; a demodulation section that demodulates the first and second downlink control signals received in the receiving section; and a transmission section that transmits the uplink control signals to a radio base station apparatus using radio resources that are determined from the information that can identify the radio resources for the uplink control signals.

The radio resource allocation method of the present invention includes the steps of: at a radio base station apparatus: selecting radio resources for uplink control signals corresponding to a first downlink control signal that is multiplexed over a control region in a subframe and a second downlink control signal that is frequency-division-multiplexed with a downlink data signal over a data region in the subframe; and transmitting the first and second downlink control signals to a user terminal with information that can identify the radio resources for the selected uplink control signals; and at the user terminal: receiving the first and second downlink control signals and the information that can identify the radio resources for the uplink control signals; demodulating the received first and second downlink control signals; and transmitting the uplink control signals to the radio base station apparatus using radio resources that can be determined from the information that can identify the radio resources for the uplink control signals, and, in this radio resource allocation method, at the radio base station apparatus, when the radio resources for the uplink control signals are selected, a radio resource that does not overlap with a radio resource for an uplink control signal corresponding to the first downlink control signal is selected as a radio resource for an uplink control signal corresponding to the second downlink control signal.

Advantageous Effects of Invention

According to the present invention, it is possible to provide a radio communication system, a radio base station apparatus, a user terminal and a radio resource allocation method that can effectively cope with the shortage of downlink control channel capacity due to increase in the number of users.

Brief Description of Drawings

FIG. 1 is a schematic diagram of a Hetnet where MU-MIMO is applied;
FIG. 2 is a diagram to show an example of a subframe where downlink MU-MIMO transmission is performed;
FIG. 3 is a diagram to explain an enhanced PDCCH (FDM-type PDCCH);
FIG. 4 is a diagram to explain a channel structure where an uplink signal is mapped;
FIG. 5 provides diagrams to show mapping tables of retransmission acknowledgement signals in PUCCH formats 1a/1b;
FIG. 6 is a diagram to show an example of allocation of enhanced PDCCHs to a system band;
FIG. 7 is a diagram to show the relationship of enhanced channel control elements (eCCEs) to enhanced PDCCHs;
FIG. 8 provides diagrams to explain enhanced PUCCH resources that are determined based on the number of OFDM symbols of a conventional PDCCH designated by a PCFICH;
FIG. 9 is a diagram to explain enhanced PUCCH resources allocated by a radio resource allocation method according to a second example;
FIG. 10 is a diagram to explain eCCE indices when code division multiplexing is applied to enhanced PDCCHs;
FIG. 11 is a diagram to explain a system configuration of a radio communication system according to an embodiment;
FIG. 12 is a diagram to explain an overall configuration of a radio base station apparatus according to an embodiment;
FIG. 13 is a diagram to explain an overall configuration of a user terminal according to an embodiment;
FIG. 14 is a functional block diagram to show a baseband processing section provided in a radio base station apparatus according to an embodiment, and part of higher layers; and
FIG. 15 is a functional block diagram of a baseband processing section of a user terminal according to an embodiment.

Description of Embodiments

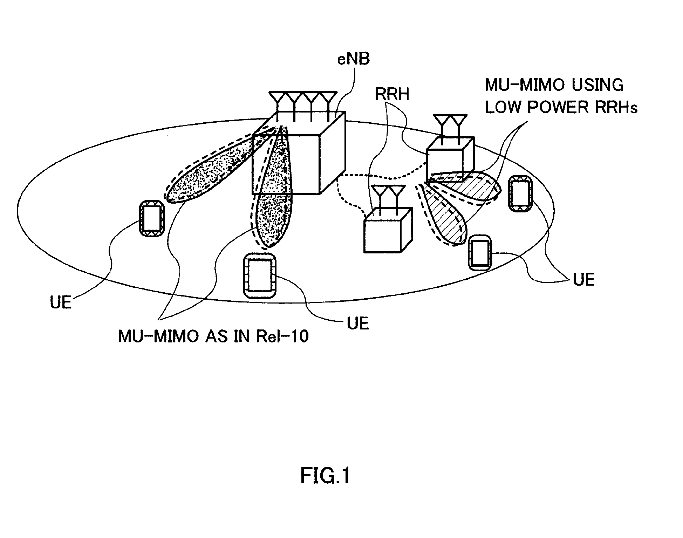

FIG. 1 is a schematic diagram of a Hetnet where MU-MIMO is applied. The system shown in FIG. 1 is configured in layers by providing a small base station apparatus RRH (Remote Radio Head) having a local cell in the cell of a base station apparatus eNB (eNodeB). In downlink MU-MIMO transmission in such a system, in addition to transmitting data for a plurality of user terminal UEs (User Equipment) from a plurality of antennas of the base station apparatus eNB at the same time, it is furthermore expected to transmit data for a plurality of user terminal UEs from a plurality of antennas of the small base station apparatus RRH at the same time. In this case, there is a possibility that control signals to be multiplexed on radio resources increase, and the capacity of downlink control channels runs short.

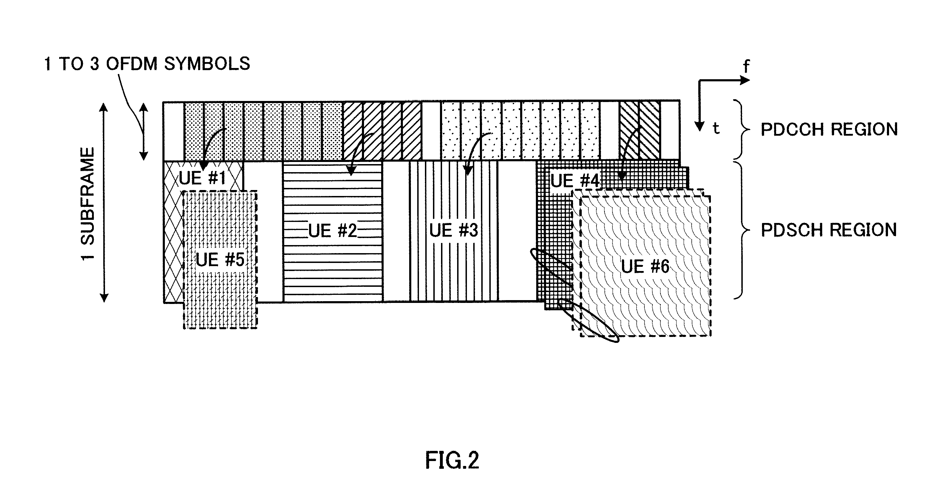

In the above-noted configuration, although spectral efficiency is improved by MU-MIMO, there is still a possibility that a problem might occur that the downlink control channel capacity of the base station apparatus may run short. FIG. 2 is a diagram to show an example of a subframe where downlink MU-MIMO transmission is performed. In the subframes, downlink data signals for user terminal UEs and signals of downlink control information (DCI) for receiving that downlink data are time-division-multiplexed and transmitted.

Also, a predetermined number of OFDM symbols (the first to third OFDM symbols) from the top of the subframe are secured as a radio resource region (PDCCH region) for a downlink control channel (PDCCH: Physical Downlink Control Channel). The PDCCH region is formed with maximum three OFDM symbols from the top of the subframe, and the number of OFDM symbols changes dynamically per subframe (that is, the number of OFDM symbols is selected from 1 to 3), depending on traffic information (for example, the number of users to be connected). Also, in radio resources after a predetermined number of symbols from the top of the subframe, a radio resource region (PDSCH region) for a downlink data channel (PDSCH: Physical Downlink Shared CHannel) is secured.

Also, in the PDCCH region, DCI to correspond to each user terminal is allocated. In this case, the situation might occur where, with the PDCCH region alone, which is formed with maximum three OFDM symbols from the subframe top, downlink control information for all the user terminal UEs cannot be allocated. For example, a case is illustrated with the radio resource allocation method shown in FIG. 2, where the PDCCH region runs short as the PDCCH signals which each user transmits increase, and where therefore the allocation resources for downlink control information for user terminal UEs #5 and #6 cannot be secured. In this way, in a radio communication system where MU-MIMO transmission is applied, allocation resources for downlink control signals may run short, and its impact upon the throughput performance of MU-MIMO transmission poses a problem.

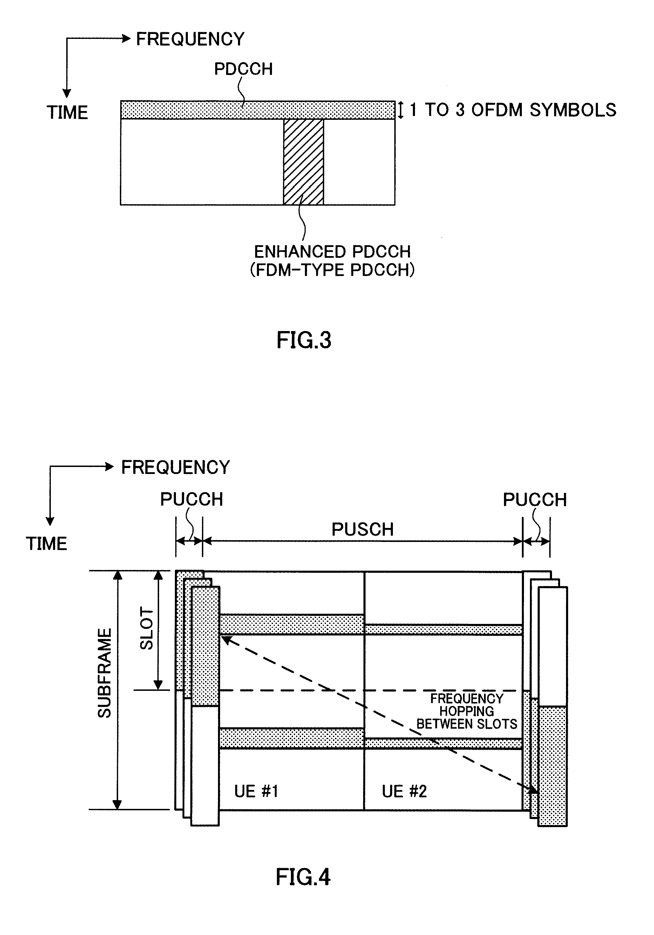

As a solution to this shortage of the PDCCH region, it may be possible to expand the PDCCH to outside the region of maximum three OFDM symbols from the top of a subframe (that is, expand the PDCCH to the conventional PDSCH region). The present inventor has conceived of using a predetermined frequency region of a conventional PDSCH region as a new PDCCH region (which will be referred to as FDM-type PDCCH or UE-PDCCH) by frequency division multiplexing downlink control signals and downlink data signals over radio resources after a predetermined symbols in a subframe (see FIG. 3).

Also, as shown in FIG. 3, when a PDCCH region is enhanced, there may be a need to study the feedback control for retransmission acknowledgement signals in response to downlink control signals (hereinafter also referred to as "enhanced PDCCH signals") of user terminals that perform transmission using the enhanced PDCCH region (hereinafter also referred to as "enhanced PDCCH"). For example, when retransmission acknowledgement signals for PDSCH signals, retransmission of which has been checked based on enhanced PDCCH signals, are transmitted using an uplink control channel (PUCCH: Physical Uplink Control Channel), it is necessary to adequately select radio resources for the PUCCH to be allocated to each user terminal.

In particular, in the LTE system, a configuration (carrier aggregation) to communicate using a plurality of fundamental frequency blocks (component carriers (CCs)) is also under study, and there is a demand to send optimal feedback of retransmission acknowledgement signals depending on the communication environment.

Here, an example of uplink transmission that is applicable to the present embodiment will be described. As shown in FIG. 4, signals to be transmitted on the uplink are multiplexed over predetermined radio resources, and transmitted from user terminals (UE #1 and UE #2) to a radio base station apparatus. Data signals of the user terminals are multiplexed over the radio resources of an uplink data channel (PUSCH: Physical Uplink Shared Channel) region. Also, uplink control signals, when transmitted at the same time with the data signals, are multiplexed over the radio resources of the PUSCH region with the data signals, and, when uplink control signals are transmitted alone, the uplink control signals are multiplexed over the radio resources of an uplink control channel (PUCCH) region.

Uplink control information to be transmitted on the uplink includes downlink quality information (CQI: Channel Quality Indicator), retransmission acknowledgement signals for downlink data signals and so on. A retransmission acknowledgement signal may be represented as a positive acknowledgement (ACK), which means that a transmission signal from a radio base station apparatus to a user terminal has been received adequately, or may be represented as a negative acknowledgement (NACK), which means that the signal has not been received adequately.

The radio base station apparatus detects from an ACK that a PDSCH signal has been transmitted successfully, and detects from a NACK that an error has been detected with the PDSCH signal. Also, the radio base station apparatus is able to determine that DTX (Discontinuous Transmission) is taking place, when the received power in radio resources allocated to a retransmission acknowledgement signal on the uplink is equal to or lower than a predetermined value.

DTX is a decision result to the effect that "neither an ACK nor a NACK has been reported from a user terminal," and means that the user terminal has been unable to receive a downlink control signal (PDCCH signal). In this case, the user terminal does not even detect the PDSCH signal transmitted to the user terminal, and therefore does not transmit an ACK or a NACK. Although the radio base station apparatus transmits the next new data upon receiving an ACK, in the event of a NACK or in the DTX state without a response, the radio base station apparatus carries out retransmission control to retransmit data that has been transmitted.

When a user terminal transmits a retransmission acknowledgement signal using PUCCH radio resources, the user terminal selects predetermined radio resources to use to transmit the retransmission acknowledgement signal from the radio resources, and transmits the PUCCH signal. Note that, as the PUCCH radio resources, OCC (Orthogonal Cover Code), CS (Cyclic Shift), and PRB (Physical Resource Block) indices are used.

Here, the method of selecting PUCCH radio resources in the user terminal will be described. In LTE (Rel. 8) and LTE-A (Rel. 9 and Rel. 10), a user terminal is able to determine the radio resources of the PUCCH to use to transmit retransmission acknowledgement signals based on the CCE indices corresponding to the PDCCH signal for the user terminal. Note that, when the aggregation level is greater than 1, the minimum CCE index among a plurality of corresponding CCE indices may be selected.

To be more specific, as shown in following equation (1), the user terminal is able to determine the PUCCH radio resources from a parameter set by RRC signaling from a higher layer and the indices of the control channel elements of the PDCCH (CCE indices). The user terminal multiplexes retransmission acknowledgement signals over the radio resource that are selected based on CCE indices in this way, and sends feedback to the radio base station apparatus.

[Formula 1]

$$n_{\text{PUCCH}}^{(1,p)} = n_{\text{CCE}} + N_{PUCCH}^{(1)}$$

.. Equation (1)

$n_{\text{CCE}}$ : CCE index corresponding to the PDCCH

$N_{PUCCH}^{(1)}$ : parameter

p: antenna port

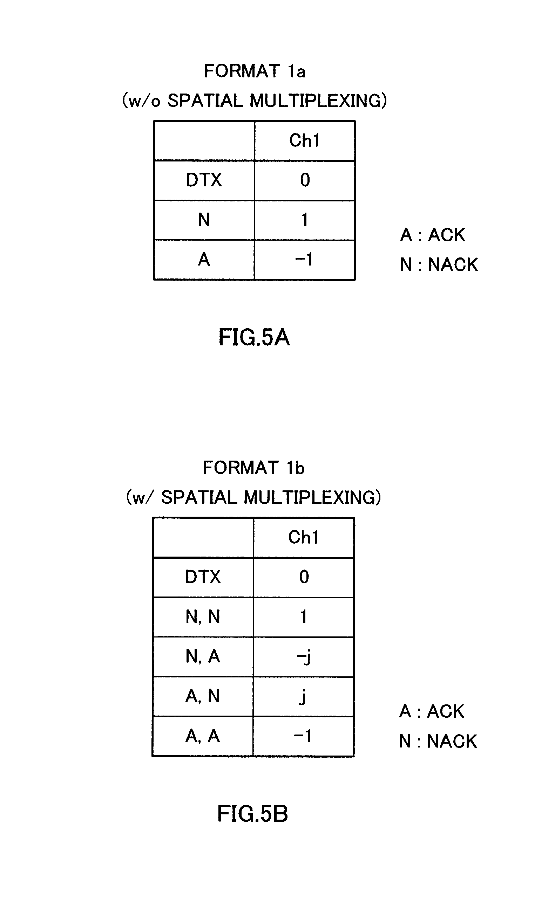

Also, as shown in FIG. 5, LTE (Rel.8) provides for formats for reporting an ACK/NACK in response to a downlink data signal (PDSCH signal) (PUCCH formats 1a/1b).

In the event of one-codeword (1CW) transmission (where the number of transport blocks is one (1TB)), three states -- "ACK," "NACK," and "DTX" -- are defined (see FIG. 5A), and, in the event of two-codeword (2CW) transmission (where the number of transport blocks is two (2TB)), five states -- "ACK, ACK," "ACK, NACK," "NACK, ACK," "NACK, NACK," and "DTX" -- are defined (see FIG. 5B). Note that, in the following description, "ACK" may be represented as "A," "NACK" may be represented as "N," and "DTX" may be represented as "D."

A codeword (CW) represents the coding unit in channel coding (error correction coding), and, when MIMO multiplexing transmission is applied, one codeword or a plurality of codewords are transmitted. In LTE, single-user MIMO uses maximum two codewords. In the event of two-layer transmission, each layer serves as an independent codeword, and, in the event of four-layer transmission, every two layers serve as one codeword.

Also, in the mapping tables of FIG. 5, "0" indicates that the user terminal does not transmit information to the radio base station apparatus in that subframe, and "1," "-1," "j" and "-j" each indicate a specific state of phase. For example, in FIG. 5A, "1" and "-1" correspond to "0" and "1," respectively, and can represent one bit of information. Also, in FIG. 5B, "1," "-1," "j" and "-j" correspond to the data "00," "11," "10" and "01," respectively, and can represent two bits of information.

In this way, when the above-described PUCCH formats 1a/1b are applied, it is possible to transmit maximum two bits of retransmission acknowledgement signals using one radio resource. Note that a user terminal, upon receiving the above-noted enhanced PDCCH signal, has to check retransmission with respect to the PDSCH signal and control transmission of retransmission acknowledgement signals, just like when receiving a conventional PDCCH signal.

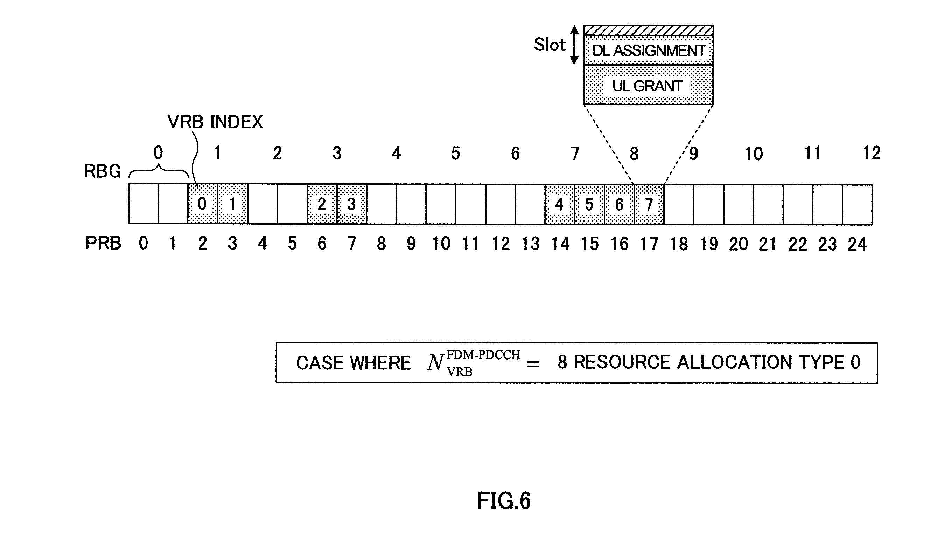

Meanwhile, when a predetermined frequency region of a conventional PDSCH region is used as a new PDCCH region, it may be possible that a plurality of enhanced PDCCHs are allocated to nonconsecutive frequency bands. Consequently, the method of allocating downlink control signals to enhanced PDCCHs becomes important. Now, an example of a method of allocating downlink control signals to enhanced PDCCHs will be described below with reference to FIG. 6.

FIG. 6 shows a case where a plurality of virtual resources are mapped to a plurality of enhanced PDCCHs and where downlink control signals are allocated to these virtual resources. Note that FIG. 6 shows a case where eight physical resource blocks (PRBs) are applied as enhanced PDCCHs to a bandwidth formed with twenty-five PRBs. In this case, a set of eight virtual resource blocks (VRBs), corresponding to each enhanced PDCCH, is set.

Also, in the PRBs, a set of $N_{VRB}$ VRBs is set depending on resource allocation types (resource allocation types 0, 1 and 2). The resource allocation types 0 and 1 support discontinuous frequency allocation in the frequency domain. Meanwhile, the resource allocation type 2 supports only continuous frequency allocation in the frequency domain. The resource allocation type 0 is represented in units of groups of neighboring resource blocks, not in units of individual resource blocks in the frequency domain. In FIG. 6, the resource block group (RBG) size is two. The eight VRBs are mapped to PRBs in units of two.

The $N_{VRB}$ VRBs are reported from the radio base station apparatus to the user terminal through higher layer signaling. In the event of FIG. 6, predetermined RBGs (RBGs = 1, 3, 7 and 8) are reported from the radio base station to the user terminal. Also, the VRBs are numbered by VRB indices, in order from the smallest PRB index (RBG index), along the frequency direction.

A resource block (VRB set) for an enhanced PDCCH may assume a configuration in which a DL assignment is arranged in the first-half slot and an UL grant is arranged in the second-half slot. By assuming this configuration, a user terminal is able to demodulate downlink data signals quickly. Note that the configuration of enhanced PDCCH resource blocks is by no means limited to this.

Also, when demodulating enhanced PDCCHs using DM-RSs, as a method of allocating downlink control signals to enhanced PDCCHs, a method of allocating each user's downlink control signal in PRB units may be possible (without cross interleaving). In this case, the radio base station apparatus allocates each user terminal's downlink control signal to enhanced PDCCHs in PRB units, and, furthermore, arranges DM-RSs, which are user-specific downlink reference signals, in radio resources where enhanced PDCCHs may be arranged. Meanwhile, a user terminal performs blind decoding in search spaces that are defined with VRB indices. By this means, channel estimation in PRB units is made possible, so that it is possible to implement effective beam forming for each user terminal.

Furthermore, when each user's downlink control signal is allocated to enhanced PDCCHs in PRB units, it may be possible to prepare a plurality of control channel elements for one PRB, as is the case with control channel elements (CCEs), which serve as the unit of allocation of downlink control information applied to a conventional PDCCH. In this case, similar to CCEs constituting a conventional PDCCH, it is possible to define search spaces using these control channel elements as fundamental units. In the following description, the control channel elements to apply to enhanced PDCCHs will be referred to as "enhanced control channel elements" (eCCEs) to differentiate from the control channel elements to apply to a conventional PDCCH.

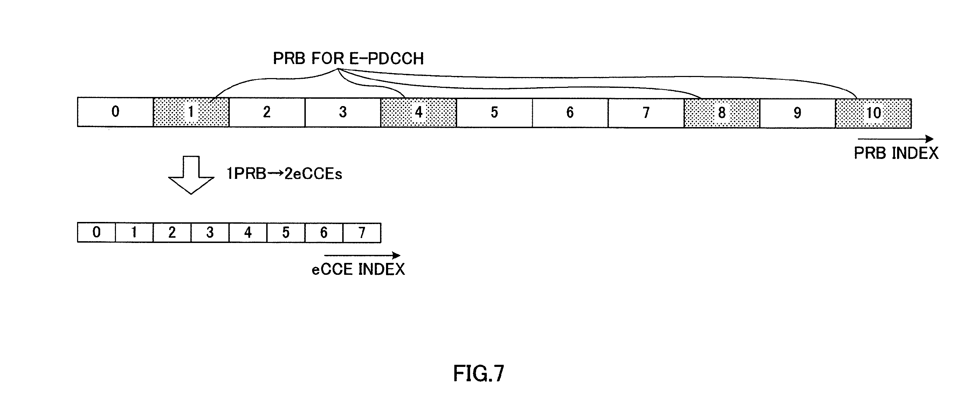

FIG. 7 shows a case where four PRBs (PRBs #1, #4, #8 and #10) out of eleven PRBs (PRBs #0 to #10) are allocated as enhanced PDCCHs. FIG. 7 shows a case where one PRB includes two control channel elements (eCCEs). Note that the number of eCCEs to constitute one PRB is not limited to two, and may be other numbers as well (for example, four).

As shown in FIG. 7, when four PRBs are used as enhanced PDCCHs and one PRB is formed with two eCCEs, the enhanced PDCCH regions are formed with total eight eCCEs. Note that, in FIG. 7, the eCCEs are numbered by index numbers, in order from the smallest PRB index, along the frequency direction.

When enhanced PDCCH signals defined in this way are used, it is necessary to allocate PUCCH radio resources to user terminals, just like when conventional PDCCH signals are received. In this case, when the radio resource of the PUCCH for an enhanced PDCCH signal (hereinafter also referred to as "enhanced PUCCH resource") is allocated to the same radio resource as the radio resource of the PUCCH for a conventional PDCCH signal (hereinafter also referred to as "conventional PUCCH resource"), it becomes not possible to receive the retransmission acknowledgement and CQI included in one of the PUCCHs in the radio base station apparatus, and, consequently, the overall system throughput performance may be degraded. So, the present inventor has studied the method of allocating enhanced PUCCH resources without influencing the allocation of conventional PUCCH resources, and arrived at the present invention.

That is, a gist of the present invention is to allocate radio resources that do not overlap with conventional PUCCH resources as enhanced PUCCH resources. By this means, it is possible to prevent the situation where enhanced PUCCH resources influence the allocation of conventional PUCCH resources, and furthermore prevent the situation where the overall system throughput performance decreases. Now, specific examples of allocating radio resources that differ from conventional PUCCH resources as enhanced PUCCH resources will be described.

(First Example)

With a first example, a conventional PUCCH resource is determined based on the total number of control channel elements (CCEs) in a conventional PDCCH, and a radio resource that does not overlap with this conventional PUCCH resource is allocated to an enhanced PUCCH resource. For example, with the first example, a radio resource that is determined from the total number of control channel elements (CCEs) in a conventional PDCCH, a parameter that is set by RRC signaling from a higher layer, and the indices (eCCE indices) of the control channel elements of an enhanced PDCCH, is allocated as an enhanced PUCCH resource.

To be more specific, as shown in following equation (2), a user terminal determines a conventional PUCCH resource from a parameter that is set by RRC signaling from a higher layer and the CCE indices of a PDCCH. On the other hand, as for an enhanced PUCCH resource, a user terminal is able to determine this from the total number of control channel elements (CCEs) in a conventional PDCCH, a parameter that is set by RRC signaling from a higher layer, and the eCCE indices of an enhanced PDCCH.

[Formula 2]

$$
\ldots \text{Equation} \quad (2)
$$

$$
n_{\text{PUCCH}}^{(1,p)} = \begin{cases} n_{\text{CCE}} + N_{PUCCH}^{(1)} & \text{for PDCCH} \\ N_{\text{CCE}}^{total} + n_{\text{eCCE}} + N_{PUCCH}^{(1)} & \text{for E-PDCCH} \end{cases}
$$

$n$CCE :     CCE index corresponding to a conventional PDCCH

$N_{PUCCH}^{(1)}$ :     parameter

p:     antenna port

$N_{\text{CCE}}^{total}$     :     total number of CCEs in a conventional PDCCH

$n_{\text{eCCE}}$:     eCCE index corresponding to an enhanced PDCCH

Here, the total number of CCEs in a conventional PDCCH can be determined from, for example, the top OFDM symbol of an enhanced PDCCH, which is reported from a higher layer through RRC signaling. That is, when the top OFDM symbol N of an enhanced PDCCH is reported by RRC signaling, it may be estimated that the OFDM symbols up to the OFDM symbol (N-1) immediately preceding that OFDM symbol are allocated to the conventional PDCCH. Consequently, the number of CCEs that can be allocated up to the OFDM symbol (N-1) is estimated to be the total number of CCEs in the conventional PDCCH.

Also, it is equally possible to determine the total number of CCEs in a conventional PDCCH from the number of OFDM symbols and the bandwidth (to be more specific, the number of resource blocks to constitute the band) of a conventional PDCCH, acquired by decoding a PCFICH. That is, with the PCFICH, the number of OFDM symbols (one to three OFDM symbols) in the conventional PDCCH is designated. In this way, it is possible to determine the total number of CCEs in a conventional PDCCH from the number of OFDM symbols designated with the PCFICH, and the bandwidth (the number of resource blocks).

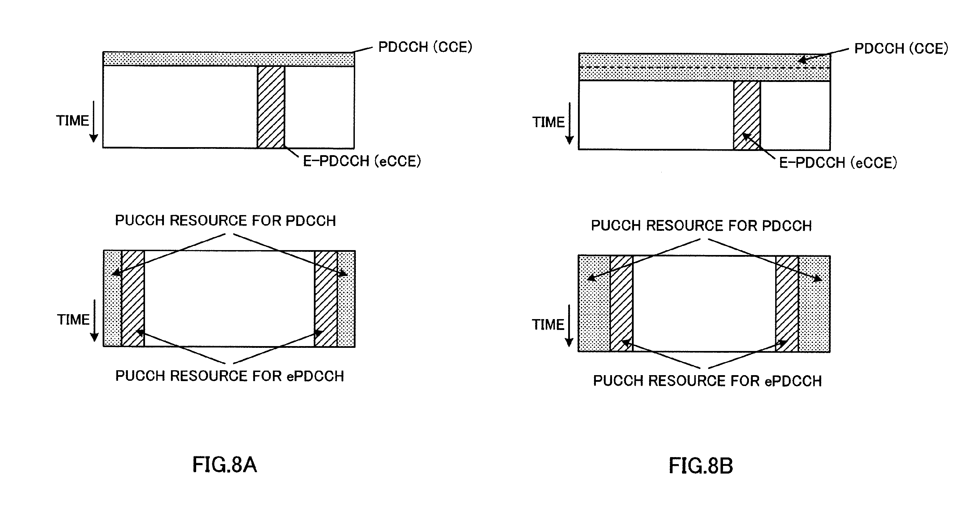

FIG. 8 is a diagram to explain an enhanced PUCCH resource determined based on the number of OFDM symbols of a conventional PDCCH designated in the PCFICH. FIG. 8A shows a case where one OFDM symbol is designated as the number of OFDM symbols in a conventional PDCCH, and FIG. 8B shows a case where two OFDM symbols are designated as the number of OFDM symbols in a conventional PDCCH. Assume that enhanced PDCCH signals (E-PDCCHs) are allocated to the same frequency band in the PDSCH regions shown in FIG. 8A and FIG. 8B.

As shown in FIG. 8A, when one OFDM symbol is designated as the number of OFDM symbols in a conventional PDCCH, conventional PUCCH resources are allocated to relatively narrow frequency bands. On the other hand, as shown in FIG. 8B, when two OFDM symbols are designated as the number of OFDM symbols in a conventional PDCCH, conventional PUCCH resources are allocated to relatively wide frequency bands. Enhanced PUCCH resources are each allocated to frequency bands that are on the inner side of conventional PUCCH resources and that do not overlap with these.

When, in this way, calculating the total number of CCEs in a conventional PDCCH based on the number of OFDM symbols in the conventional PDCCH designated by the PCFICH, the conventional PUCCH resource and the enhanced PUCCH resource can be adjusted depending on the number of OFDM symbols of the conventional PDCCH, so that it is possible to reduce the overhead on the uplink.

(Second Example)

With the first example, by allocating a radio resource that does not overlap with a conventional PUCCH resource as an enhanced PUCCH resource, it is possible to prevent the situation where enhanced PUCCH resources influence the allocation of conventional PUCCH resources and prevent the situation where the overall system throughput performance decreases.

Meanwhile, because the above-described enhanced PDCCHs are demodulated using DM-RSs that are designated separately on a per user terminal basis, it is possible to multiply precoding weights on user terminals separately. Consequently, it becomes possible to space-division-multiplex varying pieces of downlink control information (DCI) using the same radio resources (eCCEs) (SU-MIMO transmission and MU-MIMO transmission).

However, when space division multiplexing is applied to enhanced PDCCHs in this way, varying pieces of downlink control information have to share the same radio resources. Consequently, it may occur that overlapping radio resources are allocated between enhanced PUCCH resources for enhanced PDCCHs for varying user terminals.

With a second example, a conventional PUCCH resource is determined from the total number of control channel elements (CCEs) in a conventional PDCCH, and a radio resource that does not overlap with this conventional PUCCH resource is allocated to an enhanced PUCCH resource, and, furthermore, a radio resource that is adjusted by an offset value, which is associated with an antenna port designated on a per user terminal basis between enhanced PUCCH resources, is allocated. For example, with the second example, a radio resource that is determined from the total number of CCEs in a conventional PDCCH, a parameter that is set by RRC signaling from a higher layer, the indices of the control channel elements (eCCE indices) of an enhanced PDCCH, and an offset value that is associated with an antenna port, designated on a per user terminal basis, is allocated as an enhanced PUCCH resource.

To be more specific, as shown in following equation (3), a user terminal determines a conventional PUCCH resource from a parameter that is set by RRC signaling from a higher layer and the CCE indices of the PDCCH. Meanwhile, a user terminal is able to determine an enhanced PUCCH resource from the total number of CCEs in a conventional PDCCH, a parameter that is set by RRC signaling from a higher layer, the eCCE indices of an enhanced PDCCH, and the offset value corresponding to the antenna port that is designated on a per user terminal basis.

[Formula 3]

$$
n_{\text{PUCCH}}^{(1,p)} = \begin{cases} n_{\text{CCE}} + N_{PUCCH}^{(1)} & \text{for PDCCH} \\ N_{\text{CCE}}^{total} + n_{\text{eCCE}} + N_{PUCCH}^{(1)} + \Delta 1 & \text{for E - PDCCH1} \\ N_{\text{CCE}}^{total} + n_{\text{eCCE}} + N_{PUCCH}^{(1)} + \Delta 2 & \text{for E - PDCCH2} \end{cases}
$$

$$\dots \text{Equation (3)}$$

$n_{\text{CCE}}$:     CCE index corresponding to a conventional PDCCH

$N_{PUCCH}^{(1)}$:     parameter

p:     antenna port

$N_{\text{CCE}}^{total}$:     the total number of CCEs in a conventional PDCCH

$n_{\text{eCCE}}$:     eCCE index corresponding to an enhanced PDCCH

$\Delta 1$:     offset value corresponding to antenna port #X

$\Delta 2$:     offset value corresponding to antenna port #Y

Note that, in equation (3), a case is illustrated where the enhanced PUCCH resources are formed with a PUCCH resource corresponding to a first enhanced PDCCH (E-PDCCH1) and a PUCCH resource corresponding to a second enhanced PDCCH (E-PDCCH2). It is also possible to form enhanced PUCCH resources with PUCCH resources corresponding to three or more enhanced PDCCHs.

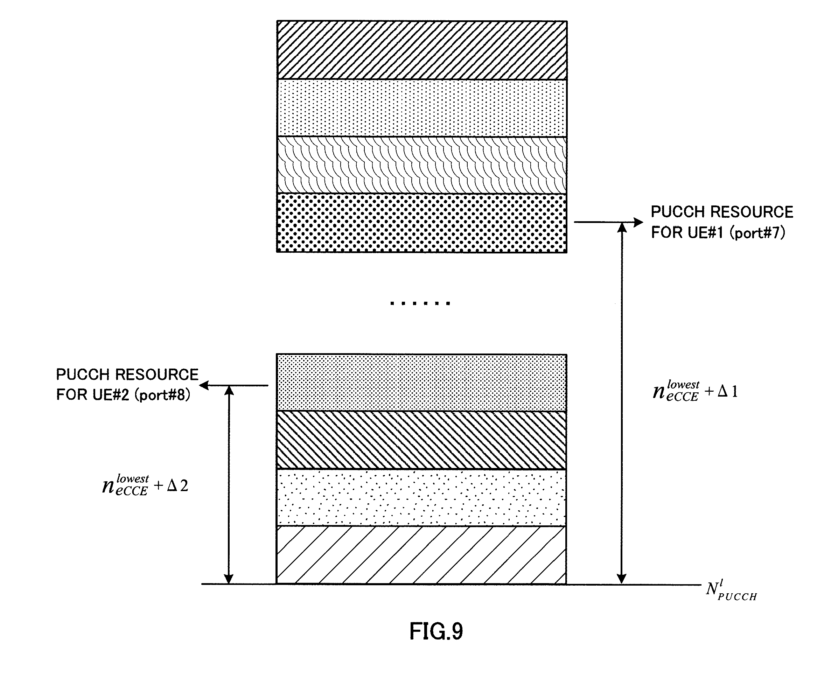

FIG. 9 is a diagram to explain enhanced PUCCH resources allocated by the radio resource allocation method according to the second example. Note that FIG. 9 shows a case where an enhanced PDCCH (E-PDCCH1) for user terminal UE #1 and an enhanced PDCCH (E-PDCCH2) for user terminal UE #2 are space-division-multiplexed, and varying pieces of downlink control information share the same radio resources. Here, assume that the enhanced PDCCH corresponding to user terminal UE #1 is allocated antenna port #7, whereas the enhanced PDCCH corresponding to user terminal UE #2 is allocated antenna port #8.

Upon receiving an enhanced PDCCH, user terminal UE #1 is able to determine the enhanced PUCCH resource from the eCCE indices corresponding to that enhanced PDCCH and the offset value Δ1 associated with antenna port #7. Meanwhile, upon receiving an enhanced PDCCH, user terminal UE #2 is able to determine the enhanced PUCCH resource from the eCCE indices corresponding to the enhanced PDCCH and the offset value Δ2 associated with antenna port #8.

Note that the eCCE indices corresponding to an enhanced PDCCH can be determined, for example, from the top OFDM symbol of the enhanced PDCCH reported by RRC signaling. Meanwhile, the antenna ports that are designated on a per user terminal basis, and the offset values that are associated with the antenna ports, may be reported by, for example, RRC signaling. Note that the antenna ports that are designated per user terminal are not limited to reporting by way of RRC signaling, and may be designed to be specified in a user terminal by being associated in advance with eCCE indices corresponding to enhanced PDCCHs.

With the radio resource allocation method according to the second example, even when varying pieces of downlink control information for user terminal UE #1 and user terminal UE #2 share the same radio resources, enhanced PUCCH resources can be adjusted with varying offset values depending on the antenna port numbers reported through RRC signaling, so that it is possible to prevent the situation where overlapping radio resources are allocated between enhanced PUCCH resources, and improve the overall system throughput performance.

For example, with the radio resource allocation method according to the second example, by setting varying offset values Δ1 and Δ2 in equation (3), it is possible to prevent the situation where overlapping radio resources are allocated between enhanced PUCCH resources. Note that, from the perspective of reducing the amount of signaling, it is also possible to report only one offset value. For example, it may be possible to make offset value Δ1 associated with antenna port #7 be 0 in advance, and, in the meantime, report offset value Δ2 associated with antenna port #8 alone. In this case, signaling for reporting offset value Δ1 can be omitted, so that it is possible to reduce the amount of signaling, and at the same time prevent the situation where overlapping radio resources are allocated between enhanced PUCCH resources.

Note that, in the description of FIG. 9, the total number of control channel elements (CCEs) in a conventional PDCCH to be used in above equation (3) is omitted for ease of explanation. However, this is obviously applicable to a case of using the total number of control channel elements (CCEs) in a conventional PDCCH as well (that is, a case where a conventional PDCCH signal and an enhanced PDCCH signal coexist). In this case, it is possible to avoid overlapping with conventional PUCCH resources, and prevent an overlap between enhanced PUCCH resources.

Note that, in LTE systems of Rel.11 and later versions, a carrier type (additional carrier) to provide no conventional PDCCH region in a subframe is under study as a frame configuration. In this additional carrier type, enhanced PDCCHs alone may be allocated. Even when enhanced PDCCHs alone are allocated in this way, with the radio resource allocation method according to the second example, CCE indices can still be adjusted with varying offset values depending on the antenna port numbers reported through RRC signaling, so that it becomes possible to prevent the situation where overlapping radio resources are allocated between enhanced PUCCH resources.

Also, the eCCE indices ($n_{eCCE}$) corresponding to an enhanced PDCCH, used in above equation (2) and equation (3), may be changed as appropriate depending on the spreading factor, when code division multiplexing is applied to the enhanced PDCCH. In this way, when code division multiplexing is applied to an enhanced PDCCH, the eCCE indices to correspond to the enhanced PDCCH (hereinafter also referred to as "eCCE indices upon code division multiplexing") may be determined from the eCCE indices, the spreading factor (SF) and the spreading code number (c) of the enhanced PDCCH, as shown in following equation (4).

[Formula 4]

$$n_{eCCE}^{CDM} = n_{eCCE} \times SF + c \quad c = 0 \sim SF - 1$$

$$\ldots \text{Equation (4)}$$

$n_{\text{eCCE}}^{\text{CDM}}$ : eCCE index corresponding to an enhanced PDCCH when code division multiplexing is applied

$n_{\text{eCCE}}$ : eCCE index corresponding to an enhanced PDCCH

SF: spreading factor

c: spreading code number

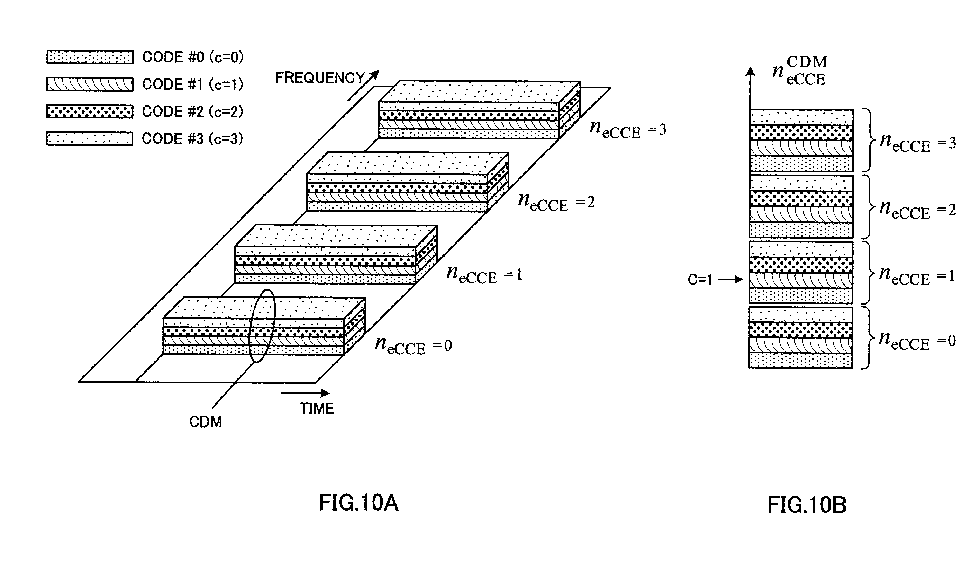

**[0064]** FIG. 10 is a diagram to explain the eCCE indices when code division multiplexing is applied to enhanced PDCCHs (eCCE indices upon code division multiplexing). Note that FIG. 10 illustrates a case where code division multiplexing is executed using four spreading codes (codes #0 to #3) (that is, a case where the spreading factor (SF) is 4). Also, assume that, in FIG. 10, the eCCE indices to correspond to the enhanced PDCCHs are 0 to 3.

As shown in FIG. 10A, when code division multiplexing is applied to enhanced PDCCHs, the radio resources designated by the eCCE indices (0 to 3) of the enhanced PDCCHs can be divided into four varying radio resources by four spreading codes (codes #0 to #3). Consequently, the eCCE indices upon code division multiplexing can be allocated to these divided radio resources separately.

For example, when an eCCE index ($n_{\text{eCCE}}$) to correspond to an enhanced PDCCH is 1 and the spreading code number c is 1, as shown in FIG. 10B, among the radio resources included in $n_{\text{eCCE}}=1$, the second radio resource from the bottom is designated as the eCCE index upon code division multiplexing.

In a similar way, when space division multiplexing is applied to an enhanced PDCCH, the eCCE indices ($n_{\text{eCCE}}$) to correspond to the enhanced PDCCH, used in above equation (2) and equation (3), may be changed as appropriate depending on the maximum number of spatial multiplexing. In this way, when space division multiplexing is applied to an enhanced PDCCH, the eCCE index to correspond to the enhanced PDCCH (hereinafter also referred to as "eCCE indices upon space division multiplexing"), may be determined from the eCCE indices of the enhanced PDCCH, the maximum number of spatial multiplexing (L) and the transmission layer number (1), as shown in following equation (5).

[Formula 5]

$$n_{\text{eCCE}}^{\text{SDM}} = n_{\text{eCCE}} \times L + l \quad l = 0 \sim L - 1$$

$$...\text{Equation (5)}$$

$n_{\text{eCCE}}^{\text{SDM}}$ : eCCE index corresponding to an enhanced PDCCH when space division multiplexing is applied

$n_{\text{eCCE}}$ : eCCE index corresponding to an enhanced PDCCH

L: maximum number of spatial multiplexing

1: transmission layer number

**[0068]** Similar to the case where code division multiplexing is applied, when space division multiplexing is applied to enhanced PDCCHs, the radio resources designated by the eCCE indices of the enhanced PDCCHs can be divided into a plurality of varying radio resources in accordance with the maximum number of spatial multiplexing (for example, four layers). Consequently, eCCE indices upon space division multiplexing can be allocated to these divided radio resources separately.

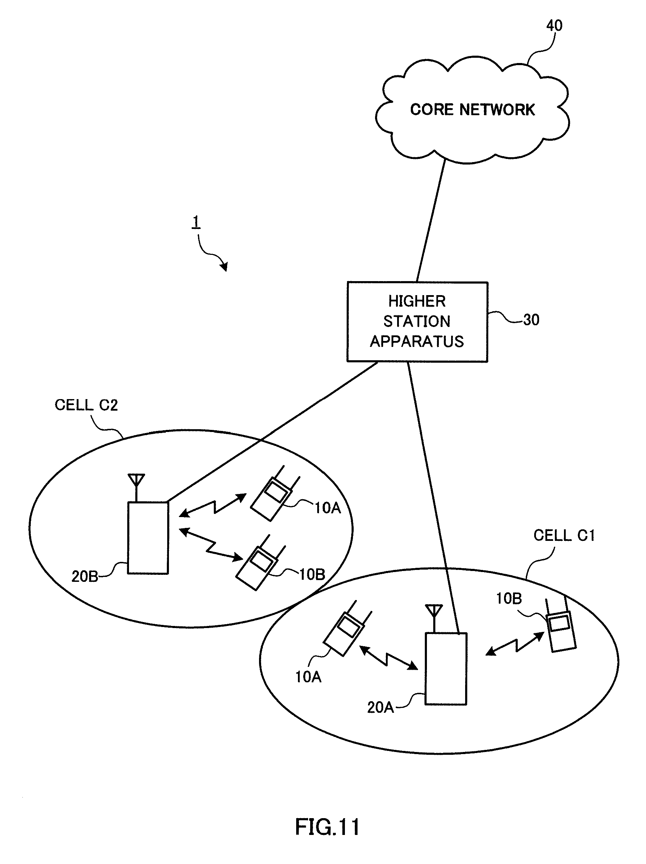

Now, a mobile communication system 1 having user terminals 10 and radio base station apparatuses 20 according to an embodiment of the present invention will be described below with reference to FIG. 11. The user terminals 10 and the radio base station apparatuses 20 support LTE-A.

As shown in FIG. 11, the radio communication system 1 is configured to include radio base station apparatuses 20 and a plurality of user terminals 10 that communicate with the radio base station apparatuses 20. The radio base station apparatuses 20 are connected with a higher station apparatus 30, and this higher station apparatus 30 is connected with a core network 40. Also, the radio base station apparatuses 20 are connected with each other by wire connection or by wireless connection. The user terminals 10 are able to communicate with the radio base station apparatus 20 in cells C1 and C2. Note that the higher station apparatus 30 may be, for example, an access gateway apparatus, a radio network controller (RNC), a mobility management entity (MME) and so on, but is by no means limited to these.

Although the user terminals 10 may be either LTE terminals or LTE-A terminals, the following description will be given simply with respect to user terminals, unless specified otherwise. Also, although the user terminals 10 will be described to perform radio communication with the radio base station apparatuses 20 for ease of explanation, more generally, user equipment, including both mobile terminal apparatuses and fixed terminal apparatuses, may be used as well.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. Note that the uplink radio access scheme is not limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Here, communication channel configurations defined in LTE-A will be described. Downlink communication channels include a PDSCH, which is used by each user terminal 10 on a shared basis, downlink L1/L2 control channels (PDCCH, PCFICH, PHICH), and enhanced PDCCHs. User data and higher control signals are transmitted by the PDSCH. Here, downlink control signals are multiplexed on the radio resources (control region), over a predetermined number of OFDM symbols (the first to third OFDM symbols) from the subframe top, and enhanced PDCCH signals and PDSCH signals are frequency-division-multiplexed on radio resources (data region) after the predetermined number of OFDM symbols.

PDSCH and PUSCH scheduling information and so on are transmitted by means of the enhanced PDCCHs. The enhanced PDCCHs are used to support the shortage of PDCCH capacity using resource regions where the PDSCH is allocated. Higher control signals may include information related to the PRB positions where the enhanced PDCCHs are set (for example, RBG information), parameters used in the control algorithm for determining the starting positions of search spaces, information related to the antenna ports and the offset values associated with the antenna ports, and so on.

Uplink control channels include a PUSCH, which is used by each user terminal 10 on a shared basis, and a PUCCH, which is an uplink control channel. User data is transmitted by means of this PUSCH. Downlink radio quality information (CQI: Channel Quality Indicator), retransmission acknowledgement signals (ACK/NACK signals) and so on are transmitted by the PUCCH.

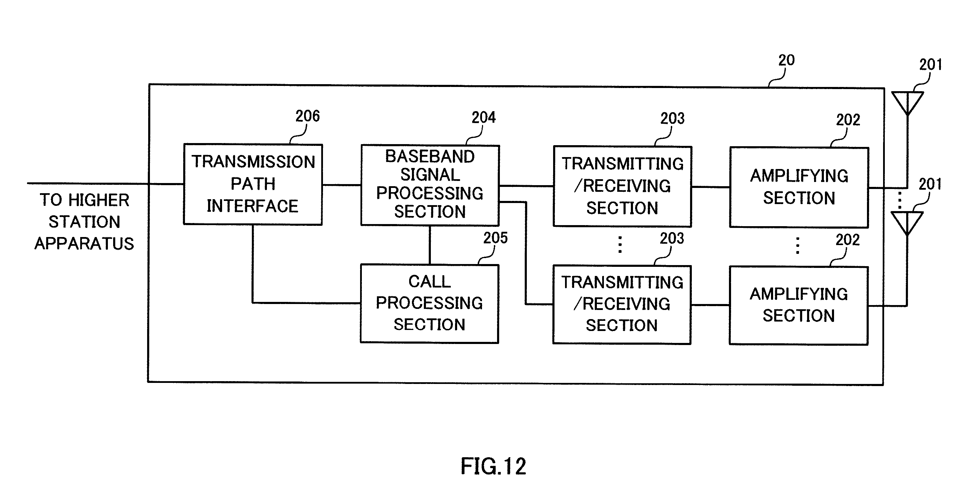

An overall configuration of the radio base station apparatus 20 according to the present embodiment will be described with reference to FIG. 12. The radio base station apparatus 20 has a plurality of transmitting/receiving antennas 201 for MIMO transmission, amplifying sections 202, transmitting/receiving sections (reporting sections) 203, a baseband signal processing section 204, a call processing section 205, and a transmission path interface 206.

User data to be transmitted from the radio base station apparatus 20 to the user terminal 10 is input from the higher station apparatus 30 of the radio base station apparatus 20 into the baseband signal processing section 204 via the transmission path interface 206. The baseband signal processing section 204 performs a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process.

The baseband signal processing section 204 reports control information for radio communication in cells to the user terminal 10 by a broadcast channel. The broadcast information for communication in cells includes, for example, the uplink or downlink system bandwidth, root sequence identification information (root sequence index) for generating signals of random access preambles of the PRACH, and so on.

The transmitting/receiving sections 203 convert the baseband signals, which have been subjected to precoding and output from the baseband signal processing section 204 on a per antenna basis, into a radio frequency band. The amplifying sections 202 amplify the radio frequency signals subjected to frequency conversion, and output the results through the transmitting/receiving antennas 201. On the other hand, as for data to be transmitted from the user terminal 10 to the radio base station apparatus 20 via the uplink, radio frequency signals that are received in the transmitting/receiving antennas 201 are each amplified in the amplifying sections 202, converted into baseband signals through frequency conversion in the transmitting/receiving sections 203, and input in the baseband signal processing section 204.

The baseband signal processing section 204 applies an FFT process, an IDFT process, error correction decoding, a MAC retransmission control receiving process, and RLC layer and PDCP layer receiving processes to the user data included in the baseband signals received as input, and transfers the result to the higher station apparatus 30 via the transmission path interface 206. The call processing section 205 performs call processing such as setting up and releasing communication channels, manages the state of the radio base station apparatus 20 and manages the radio resources.

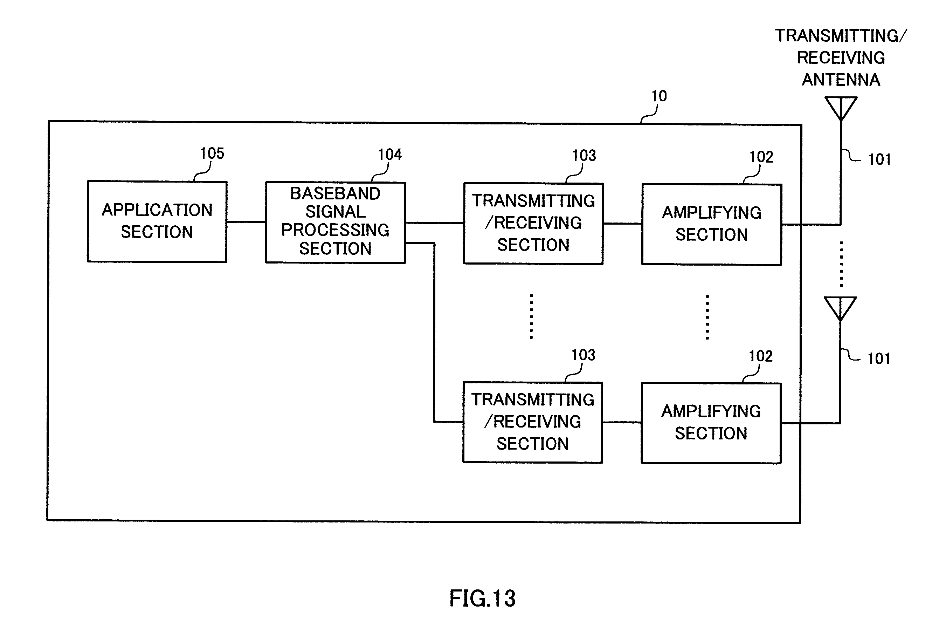

Next, an overall configuration of a user terminal 10 according to the present embodiment will be described with reference to FIG. 13. An LTE terminal and an LTE-A terminal have the same hardware configurations in principle parts, and therefore will be described indiscriminately. The user terminal 10 has a plurality of transmitting/receiving antennas 101 for MIMO transmission, amplifying sections 102, transmitting/receiving sections 103, a baseband signal processing section 104, and an application section 105.

As for downlink data, radio frequency signals that are received in a plurality of transmitting/receiving antennas 101 are each amplified in the amplifying sections 102, and subjected to frequency conversion and converted into baseband signals in the transmitting/receiving sections 103. The baseband signals are subjected to receiving processes such as an FFT process, error correction decoding and retransmission control, in the baseband signal processing section 104. In this downlink data, downlink user data is transferred to the application section 105. The application section 105 performs processes related to higher layers above the physical layer and the MAC layer. Also, in the downlink data, broadcast information is also transferred to the application section 105.

On the other hand, uplink user data is input from the application section 105 into the baseband signal processing section 104. The baseband signal processing section 104 performs a retransmission control (H-ARQ (Hybrid ARQ)) transmission process, channel coding, precoding, a DFT process, an IFFT process, and so on, and the result is transferred to each transmitting/receiving section 103.

The baseband signals that are output from the baseband signal processing section 104 are converted into a radio frequency band in the transmitting/receiving sections 103. After that, the amplifying sections 102 amplify the radio frequency signals having been subjected to frequency conversion, and transmit the results from the transmitting/receiving antennas 101.

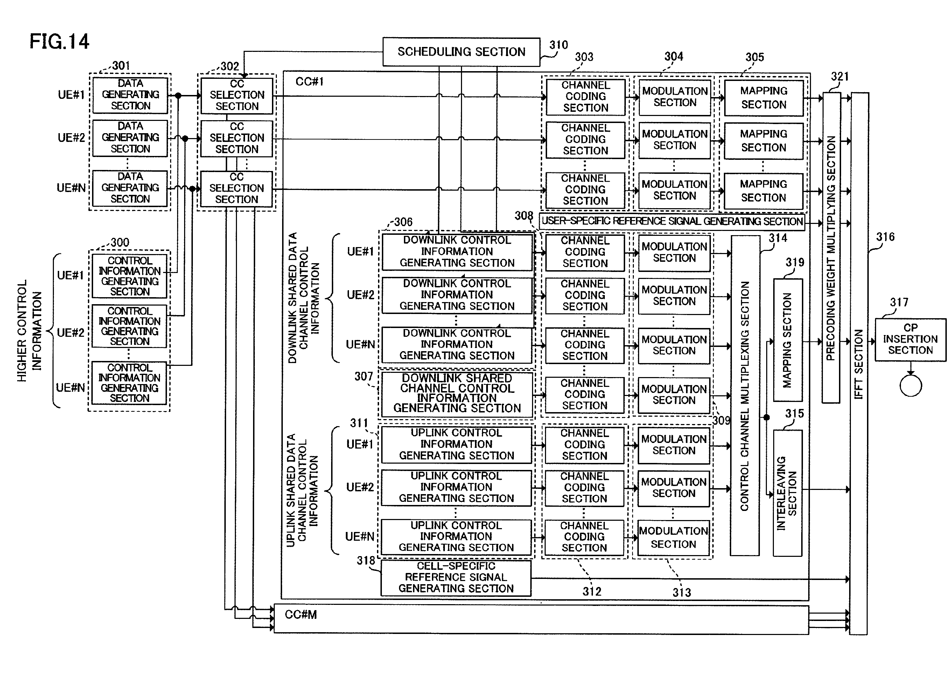

FIG. 14 is a functional block diagram of a baseband signal processing section 204 provided in the radio base station apparatus 20 according to the present embodiment and part of the higher layers, and primarily illustrates the function blocks for transmission processes in the baseband signal processing section 204. FIG. 14 shows an example of a base station configuration which can support maximum M component carriers (CC #1 to CC #M). Transmission data for user terminals 10 under the radio base station apparatus 20 is transferred from the higher station apparatus 30 to the radio base station apparatus 20.

Control information generating sections 300 generate higher control information to send through higher layer signaling (for example, RRC signaling), on a per user basis. Also, the higher control information may include resource blocks (PRB positions) where enhanced PDCCHs (FDM-type PDCCHs) can be mapped in advance. Also, if necessary, the parameters to use in the control algorithm for determining the starting positions of search spaces, information related to antenna ports and the offset values to be associated with the antenna ports, and so on may be generated. Note that these pieces of information constitute information that can identify the radio resources for the PUCCH.

The data generating sections 301 separately output transmission data transferred from the higher station apparatus 30 as user data, on a per user basis. The component carrier selection sections 302 select component carriers to be used for radio communication with the user terminals 10, on a per user basis. An increase/decrease of component carriers is reported from the radio base station apparatus 20 to the user terminal 10 by RRC signaling, and a message of completion of application is received from the user terminal 10.

The scheduling section 310 controls the allocation of component carriers to the user terminals 10 under control, according to the overall communication quality of the system band. Also, a specific component carrier (PCC) is determined from the component carriers that are selected for each user terminal. Also, the scheduling section 310 controls the allocation of resources in each component carrier CC #1 to CC #M. LTE terminal users and LTE-A terminal users are scheduled separately. The scheduling section 310 receives as input transmission data and retransmission commands from the higher station apparatus 30, and also receives as input channel estimation values and resource block CQIs from the receiving section having measured an uplink signal.

Also, the scheduling section 310 schedules uplink and downlink control information and uplink and downlink shared channel signals, with reference to the retransmission commands, channel estimation values and CQIs that have been received as input. That is, the scheduling section 310 constitutes a selection section that selects the radio resource for the PUCCH corresponding to a PDCCH signal and an enhanced PDCCH signal. When a PDCCH signal and an enhanced PDCCH signal coexist, the scheduling section 310 selects a radio resource that does not overlap with a conventional PUCCH resource, as an enhanced PUCCH resource as shown in the first example. In particular, when space division multiplexing is applied to an enhanced PDCCH, as shown in the second example, a radio resource that does not overlap between enhanced PUCCH resources is selected, based on the premise of overlap with the conventional PUCCH resource.

A propagation path in mobile communication varies differently per frequency, due to frequency selective fading. So, the scheduling section 310 designates resource blocks (mapping positions) of good communication quality, on a per subframe basis, with respect to the user data for each user terminal 10 (which is referred to as "adaptive frequency scheduling"). In adaptive frequency scheduling, a user terminal 10 of good propagation path quality is selected for each resource block. Consequently, the scheduling section 310 designates resource blocks (mapping positions), using the CQI of each resource block fed back from each user terminal 10.

Likewise, the scheduling section 310 designates resource blocks (mapping positions) of good communication quality, on a per subframe basis, with respect to the control information and so on to be transmitted by enhanced PDCCHs, by adaptive frequency scheduling. Consequently, the scheduling section 310 designates the resource blocks (mapping positions) using the CQI of each resource block fed back from each user terminal 10.

Also, the scheduling section 310 determines the MCS (coding rate and modulation scheme) to fulfill a predetermined block error rate with the allocated resource blocks. Parameters that satisfy the MCS (coding rate and modulation scheme) determined by the scheduling section 310 are set in channel coding sections 303, 308 and 312, and modulation sections 304, 309 and 313.

The baseband signal processing section 204 has channel coding sections 303, modulation sections 304 and mapping sections 305 to support the maximum number of users to multiplex, N, in one component carrier. The channel coding sections 303 perform channel coding of the downlink shared data channel (PDSCH), which is formed with user data (including part of higher control signals) that is output from the data generating sections 301, on a per user basis. The modulation sections 304 modulate user data having been subjected to channel coding, on a per user basis. The mapping sections 305 map the modulated user data to radio resources.

The downlink control information generating sections 306 generate downlink shared data channel control information (DL assignment) for controlling the downlink shared data channel (PDSCH). This downlink shared data channel control information is generated on a per user basis. Also, the baseband signal processing section 204 has a downlink shared channel control information generating section 307 which generates downlink shared control channel control information, which is downlink control information that is common between users.

Also, the baseband signal processing section 204 has uplink control information generating sections 311, channel coding sections 312, and modulation sections 313. The uplink control information generating sections 311 generate uplink shared data channel control information (UL grants and so on) for controlling the uplink shared data channel (PUSCH). This uplink shared data channel control information is generated on a per user basis.

A cell-specific reference signal generating section 318 generates cell-specific reference signals (CRSs), which are used for various purposes such as channel estimation, symbol synchronization, CQI measurement, mobility measurement, and so on. Also, a user-specific reference signal generating section 320 generates DM-RSs, which are user-specific downlink demodulation reference signals.

The control information that is modulated on a per user basis in the above modulation sections 309 and 313 is multiplexed in a control channel multiplexing section 314. Downlink control information for the PDCCH is multiplexed over the first to third OFDM symbols from the subframe top, and is interleaved in an interleaving section 315. Meanwhile, downlink control information for the enhanced PDCCH (FRM-type PDCCH) is frequency-division-multiplexed on radio resources after a predetermined number of symbols in the subframe, and is mapped to resource blocks (PRBs) in a mapping section 319. In this case, the mapping section 319 performs the mapping based on commands from the scheduling section 310.

A precoding weight multiplying section 321 controls (shifts) the phase and/or the amplitude of the transmission data and user-specific demodulation reference signals (DM-RSs) that are mapped to the subcarriers, for each of a plurality of antennas. The transmission data and user-specific demodulation reference signals (DM-RSs) having been subjected to a phase and/or amplitude shift in the precoding weight multiplying section 321 are output to an IFFT section 316.

The IFFT section 316 receives as input control signals from the interleaving section 315 and the mapping section 319, and receives as input user data from the mapping sections 305. The IFFT section 316 performs an inverse fast Fourier transform of downlink channel signals and converts the frequency domain signals into time sequence signals. A cyclic prefix inserting section 317 inserts cyclic prefixes in the time sequence signal of the downlink channel signals. Note that a cyclic prefix functions as a guard interval for cancelling the differences in multipath propagation delay. Transmission data, to which cyclic prefixes have been added, is transmitted to the transmitting/receiving sections 203.

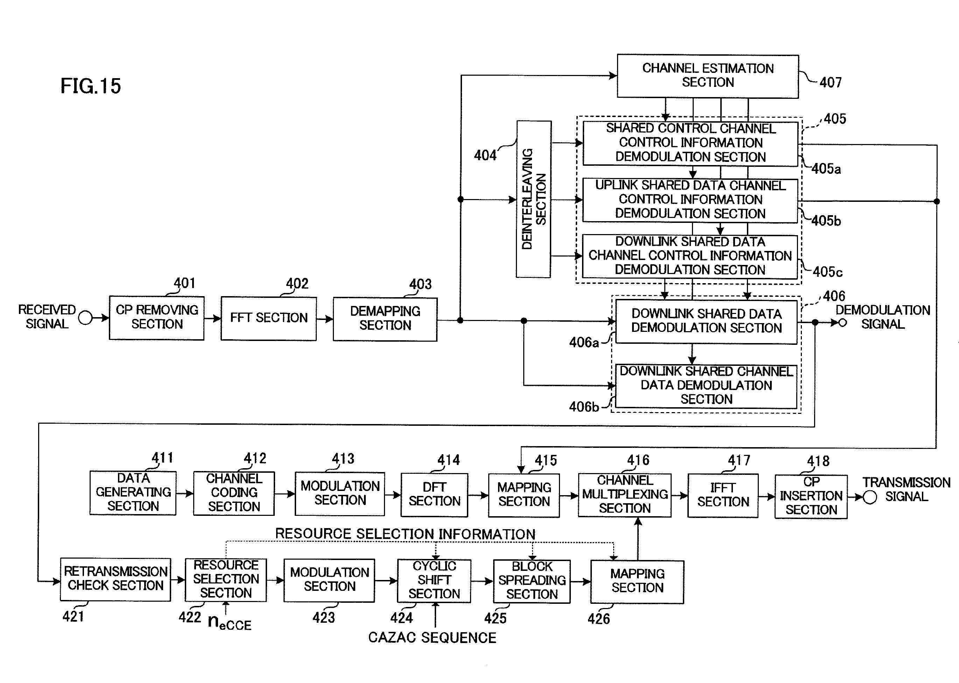

FIG. 15 is a functional block diagram of the baseband signal processing section 104 provided in a user terminal 10 and shows functional blocks of an LTE-A terminal which supports LTE-A.

A downlink signal that is received as received data from the radio base station apparatus 20 has the CPs removed in a CP removing section 401. The downlink signal, from which the CPs have been removed, is input in an FFT section 402. The FFT section 402 performs a fast Fourier transform (FFT) on the downlink signal, converts the time domain signal into a frequency domain signal and inputs this signal in a demapping section 403. The demapping section 403 demaps the downlink signal, and extracts, from the downlink signal, multiplex control information in which a plurality of pieces of control information are multiplexed, user data, and higher control signals. Note that the demapping process by the demapping section 403 is performed based on higher control signals that are received as input from the application section 105. The multiplex control information that is output from the demapping section 403 is deinterleaved in a deinterleaving section 404.

Also, the baseband signal processing section 104 has a control information demodulation section 405 that demodulates control information, a data demodulation section 406 that demodulates downlink shared data, and a channel estimation section 407. The control information demodulation section 405 includes a shared control channel control information demodulation section 405a that demodulates downlink shared control channel control information from the multiplex control information, an uplink shared data channel control information demodulation section 405b that demodulates uplink shared data channel control information from the multiplex control information, and a downlink shared data channel control information demodulation section 405c that demodulates downlink shared data channel control information from the multiplex control information. The data demodulation section 406 includes a downlink shared data demodulation section 406a that demodulates user data and higher control signals, and a downlink shared channel data demodulation section 406b that demodulates downlink shared channel data.

The shared control channel control information demodulation section 405a extracts shared control channel control information, which is control information that is common between users, by performing a blind decoding process of the common search spaces in the downlink control channel (PDCCH), a demodulation process, a channel decoding process and so on. The shared control channel control information, including downlink channel quality information (CQI), is input in a mapping section 415, and is mapped as part of transmission data for the radio base station apparatus 20.

The uplink shared data channel control information demodulation section 405b extracts uplink shared data channel control information (for example, UL grants) by performing a blind decoding process in the user-specific search spaces on the downlink control channel (PDCCH), a demodulation process, a channel decoding process and so on. The demodulated uplink shared data channel control information is input in the mapping section 415 and is used to control the uplink shared data channel (PUSCH).

The downlink shared data channel control information demodulation section 405c extracts user-specific downlink shared data channel control information (for example, DL assignments) by performing a blind decoding process in the user-specific search spaces on the downlink control channel (PDCCH), a demodulation process, a channel decoding process and so on. The demodulated downlink shared data channel control information is input in the downlink shared data demodulation section 406, used to control the downlink shared data channel (PDSCH), and input in the downlink shared data demodulation section 406a.

In the event of the conventional PDCCH or an enhanced PDCCH, the control information demodulation section 405 performs a blind decoding process with respect to a plurality of candidate CCE s.

The downlink shared data demodulation section 406a acquires user data and higher control information based on downlink shared data channel control information that is input from the downlink shared data channel control information demodulation section 405c. The PRB positions where the enhanced PDCCH can be mapped, included in the higher control information, are output to the downlink shared data channel control information demodulation section 405c. The downlink shared channel data demodulation section 406b demodulates downlink shared channel data based on the uplink shared data channel control information that is input from the uplink shared data channel control information demodulation section 405b.

The channel estimation section 407 performs channel estimation using user-specific reference signals (DM-RSs) or cell-specific reference signals (CRSs). In the event of demodulating the normal PDCCH, channel estimation is performed using cell-specific reference signals. On the other hand, when demodulating enhanced PDCCHs and user data, channel estimation is performed using DM-RSs and CRSs. The estimated channel variation is output to the shared control channel control information demodulation section 405a, the uplink shared data channel control information demodulation section 405b, the downlink shared data channel control information demodulation section 405c and the downlink shared data demodulation section 406a. In these demodulation sections, the demodulation process is performed using the estimated channel variation and demodulation reference signals.

The baseband signal processing section 104 has, as functional blocks of the transmitting processing system, a data generating section 411, a channel coding section 412, a modulation section 413, a DFT section 414, a mapping section 415, a channel multiplexing section 416, an IFFT section 417, and a CP inserting section 418. Also, the baseband signal processing section 104 has, as functional blocks of the transmitting processing system for the PUCCH, a retransmission check section 421, a resource selection section 422, a modulation section 423, a cyclic shift section 424, a block spreading section 425, and a mapping section 426.

The data generating section 411 generates transmission data from bit data that is received as input from the application section 105. The channel coding section 412 performs channel coding processes such as error correction for the transmission data, and the modulation section 413 modulates the transmission data after channel coding by QPSK and so on. The DFT section 414 performs a discrete Fourier transform on the modulated transmission data. The mapping section 415 maps the frequency components of the data symbols after the DFT to subcarrier positions designated by the radio base station apparatus 20. Also, the mapping section 415 outputs the mapped signals to the channel multiplexing section 416.

The retransmission check section 421 checks retransmission for the PDSCH signal based on the PDCCH signal or the enhanced PDCCH signal, and outputs a retransmission acknowledgement signal. When a plurality of CCs are allocated for communication with the radio base station apparatus, the retransmission check section 421 checks whether or not the PDSCH signal has been received without error, on a per CC basis. The retransmission check section 421 outputs the retransmission acknowledgement signal to the resource selection section 422. Note that a case is shown here where the retransmission acknowledgement signal is transmitted by the PUCCH (a case where there is no PUSCH signal in the subframe upon transmission). The retransmission acknowledgement signal is multiplexed with the data signal when included and transmitted in the PUSCH.

As has been shown with the above embodiment, the resource selection section 422 selects the radio resource for transmission of the retransmission acknowledgement signal based on the CCE indices (eCCE indices) corresponding to the PDCCH signal or the enhanced PDCCH signal, antenna ports, the offset values associated with the antenna ports, and so on. Information about the selected radio resources is reported to the modulation section 423, the cyclic shift section 424, the block spreading 425 and the mapping section 426.

The modulation section 423 performs phase modulation (PSK data modulation) based on the information reported from the resource selection section 422. The cyclic shift section 424 performs orthogonal multiplexing using cyclic shift of a CAZAC (Constant Amplitude Zero Auto Correlation) code sequence. Note that the amount of cyclic shift varies per user terminal 10, and is associated with cyclic shift indices. The cyclic shift section 424 outputs the signal after the cyclic shift to the block spreading section (orthogonal code multiplying means) 425. The block spreading section 425 multiplies the orthogonal code upon the reference signal after the cyclic shift (block spreading). Here, the OCC (block spreading code number) to use for the reference signal may be reported by RRC signaling and so on from a higher layer, or the OCC that is associated with the CS of the data symbol in advance may be used. The block spreading section 425 outputs the signal after the block spreading to the mapping section 426.

The mapping section 426 maps the signal after the block spreading to subcarriers based on information reported from the resource selection section 422. Also, the mapping section 426 outputs the mapped signal to the channel multiplexing section 416. The channel multiplexing section 416 time-multiplexes the signals from the mapping sections 415 and 426 and makes a transmission signal that includes uplink control channel signals. The IFFT section 417 performs an IFFT of the channel-multiplexed signal and converts it into a time domain signal. The IFFT section 417 outputs the signal after the IFFT to the CP inserting section 418. The CP inserting section 418 attaches CPs to the signal after orthogonal code multiplication. Then, uplink transmission signals are transmitted to the radio communication apparatus using an uplink channel.

Note that, although a case has been described with the above description where, when uplink control information is transmitted on the uplink from the user terminal 10, orthogonal multiplexing is applied between users using cyclic shift of a CAZAC code sequence and retransmission acknowledgement signals are fed back, this is by no means limiting.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

For example, the enhanced PDCCH of the above embodiment has been described such that enhanced control channel elements (eCCEs), which correspond to CCEs of a conventional PDCCH, are used as the unit of allocation for PDSCH regions. However, as for the allocation unit of enhanced PDCCHs for PDSCH regions, this is by no means limiting, and can be changed as appropriate. It is equally possible to use enhanced REGs (eREGs), which correspond to REGs (Resource Element Group) of a conventional PDCCH, as the unit of allocation for PDSCH regions.

The disclosure of Japanese Patent Application No. 2012-062822, filed on March 19, 2012, including the specification, drawings and abstract, is incorporated herein by reference in its entirety.

## Claims

1. A radio communication system comprising:

   a radio base station apparatus having:

   a selection section that selects radio resources for uplink control signals corresponding to a first downlink control signal that is multiplexed over a control region in a subframe and a second downlink control signal that is frequency-division-multiplexed with a downlink data signal over a data region in the subframe; and
   a transmission section that transmits the first and second downlink control signals to a user terminal with information that can identify the radio resources for the uplink control signals selected in the selection section; and

   a user terminal having:

   a receiving section that receives the first and second downlink control signals and the information that can identify the radio resources for the uplink control signals;

EP 2 830 377 A1

a demodulation section that demodulates the first and second downlink control signals received in the receiving section; and

a transmission section that transmits the uplink control signals to the radio base station apparatus using radio resources that can be determined from the information that can identify the radio resources for the uplink control signals,

wherein the selection section selects a radio resource that does not overlap with a radio resource for an uplink control signal corresponding to the first downlink control signal, as a radio resource for an uplink control signal corresponding to the second downlink control signal.

2. The radio communication system according to claim 1, wherein the selection section selects a radio resource that is different from the radio resource for the uplink control signal corresponding to the first downlink control signal, determined based on a total number of control channel elements which serve as an allocation unit of the first downlink control signal in the control region, as the radio resource for the uplink control signal corresponding to the second downlink control signal.

3. The radio communication system according to claim 2, wherein the selection section adjusts the total number of control channel elements which serve as the allocation unit of the first downlink control signal depending on the number of OFDM symbols constituting the control region.

4. The radio communication system according to claim 1, wherein, when space division multiplexing is applied to the second downlink control signal, the transmission section transmits offset values associated with antenna ports that are allocated individually to the user terminals, to the user terminals, as the information that can identify the radio resources for the uplink control signals.

5. The radio communication system according to claim 1, wherein, when space division multiplexing is applied to the second downlink control signal, the transmission section transmits antenna ports that are allocated individually to the user terminals and offset values that are associated with the antenna ports, to the user terminals, as the information that can identify the radio resources for the uplink control signals.

6. A radio base station apparatus comprising:

a selection section that selects radio resources for uplink control signals corresponding to a first downlink control signal that is multiplexed over a control region in a subframe and a second downlink control signal that is frequency-division-multiplexed with a downlink data signal over a data region in the subframe; and

a transmission section that transmits the first and second downlink control signals to a user terminal with information that can identify the radio resources for the uplink control signals selected in the selection section, wherein the selection section selects a radio resource that does not overlap with a radio resource for an uplink control signal corresponding to the first downlink control signal, as a radio resource for an uplink control signal corresponding to the second downlink control signal.

7. A user terminal comprising:

a receiving section that receives a first downlink control signal that is multiplexed over a control region in a subframe and a second downlink control signal that is frequency-division-multiplexed with a downlink data signal over a data region in the subframe, and information that can identify radio resources for uplink control signals corresponding to the first and second control signals;

a demodulation section that demodulates the first and second downlink control signals received in the receiving section; and

a transmission section that transmits the uplink control signals to a radio base station apparatus using radio resources that are determined from the information that can identify the radio resources for the uplink control signals.

8. A radio resource allocation method comprising the steps of:

at a radio base station apparatus:

selecting radio resources for uplink control signals corresponding to a first downlink control signal that is multiplexed over a control region in a subframe and a second downlink control signal that is frequency-division-multiplexed with a downlink data signal over a data region in the subframe; and
transmitting the first and second downlink control signals to a user terminal with information that can identify the radio resources for the selected uplink control signals; and

at the user terminal:

receiving the first and second downlink control signals and the information that can identify the radio resources for the uplink control signals;
demodulating the received first and second downlink control signals; and
transmitting the uplink control signals to the radio base station apparatus using radio resources that can be determined from the information that can identify the radio resources for the uplink control signals,

wherein, at the radio base station apparatus, when the radio resources for the uplink control signals are selected, a radio resource that does not overlap with a radio resource for an uplink control signal corresponding to the first downlink control signal is selected as a radio resource for an uplink control signal corresponding to the second downlink control signal.

FIG.1

1 TO 3 OFDM SYMBOLS

1 SUBFRAME

f

t

PDCCH REGION

PDSCH REGION

UE #1

UE #5

UE #2

UE #3

UE #4

UE #6

FIG.2

EP 2 830 377 A1

19

FREQUENCY

TIME

PDCCH

⇕ 1 TO 3 OFDM SYMBOLS

ENHANCED PDCCH
(FDM-TYPE PDCCH)

FIG.3

FREQUENCY

TIME

PUCCH

PUSCH

PUCCH

SUBFRAME

SLOT

FREQUENCY
HOPPING
BETWEEN SLOTS

UE #1

UE #2

FIG.4

FORMAT 1a
(w/o SPATIAL MULTIPLEXING)

|  | Ch1 |
|---|---|
| DTX | 0 |
| N | 1 |
| A | −1 |

A : ACK

N : NACK

FIG.5A

FORMAT 1b
(w/ SPATIAL MULTIPLEXING)

|  | Ch1 |
|---|---|
| DTX | 0 |
| N, N | 1 |
| N, A | −j |
| A, N | j |
| A, A | −1 |

A : ACK

N : NACK

FIG.5B

CASE WHERE $N_{VRB}^{FDM\text{-}PDCCH} = 8$ RESOURCE ALLOCATION TYPE 0

FIG.6

EP 2 830 377 A1

PRB FOR E-PDCCH

| 0 | 1 | 2 | 3 | 4 | 5 | 6 | 7 | 8 | 9 | 10 |

PRB INDEX

1PRB→2eCCEs

| 0 | 1 | 2 | 3 | 4 | 5 | 6 | 7 |

eCCE INDEX

FIG.7

FIG.8A

FIG.8B

EP 2 830 377 A1

PUCCH RESOURCE
FOR UE#1 (port#7)

PUCCH RESOURCE
FOR UE#2 (port#8)

$n_{eCCE}^{lowest} + \Delta 1$

$n_{eCCE}^{lowest} + \Delta 2$

$N_{PUCCH}^{l}$

FIG.9

FIG.10A

FIG.10B

FIG.11

TO HIGHER STATION APPARATUS

TRANSMISSION PATH INTERFACE
206

BASEBAND SIGNAL PROCESSING SECTION
204

TRANSMITTING /RECEIVING SECTION
203

AMPLIFYING SECTION
202

CALL PROCESSING SECTION
205

TRANSMITTING /RECEIVING SECTION
203

AMPLIFYING SECTION
202

20

201

201

FIG.12

TRANSMITTING/
RECEIVING
ANTENNA

10

101

105
APPLICATION
SECTION

104
BASEBAND
SIGNAL
PROCESSING
SECTION

103
TRANSMITTING
/RECEIVING
SECTION

102
AMPLIFYING
SECTION

101

103
TRANSMITTING
/RECEIVING
SECTION

102
AMPLIFYING
SECTION

FIG.13

FIG.14

SCHEDULING SECTION 310

CC#1

HIGHER CONTROL INFORMATION

301 DATA GENERATING SECTION (UE#1)
DATA GENERATING SECTION (UE#2)
DATA GENERATING SECTION (UE#N)

302 CC SELECTION SECTION
CC SELECTION SECTION
CC SELECTION SECTION

303 CHANNEL CODING SECTION
CHANNEL CODING SECTION
CHANNEL CODING SECTION

304 MODULATION SECTION
MODULATION SECTION
MODULATION SECTION

305 MAPPING SECTION
MAPPING SECTION
MAPPING SECTION

321 PRECODING WEIGHT MULTIPLYING SECTION

316 IFFT SECTION

317 CP INSERTION SECTION

300 CONTROL INFORMATION GENERATING SECTION (UE#1)
CONTROL INFORMATION GENERATING SECTION (UE#2)
CONTROL INFORMATION GENERATING SECTION (UE#N)

308 USER-SPECIFIC REFERENCE SIGNAL GENERATING SECTION

DOWNLINK SHARED DATA CHANNEL CONTROL INFORMATION

306 DOWNLINK CONTROL INFORMATION GENERATING SECTION (UE#1)
DOWNLINK CONTROL INFORMATION GENERATING SECTION (UE#2)
DOWNLINK CONTROL INFORMATION GENERATING SECTION (UE#N)

307 DOWNLINK SHARED CHANNEL CONTROL INFORMATION GENERATING SECTION

CHANNEL CODING SECTION
CHANNEL CODING SECTION
CHANNEL CODING SECTION
CHANNEL CODING SECTION

MODULATION SECTION
MODULATION SECTION
MODULATION SECTION
MODULATION SECTION

314 CONTROL CHANNEL MULTIPLEXING SECTION

319 MAPPING SECTION

309

UPLINK SHARED DATA CHANNEL CONTROL INFORMATION

311 UPLINK CONTROL INFORMATION GENERATING SECTION (UE#1)
UPLINK CONTROL INFORMATION GENERATING SECTION (UE#2)
UPLINK CONTROL INFORMATION GENERATING SECTION (UE#N)

CHANNEL CODING SECTION
CHANNEL CODING SECTION
CHANNEL CODING SECTION

MODULATION SECTION
MODULATION SECTION
MODULATION SECTION

315 INTERLEAVING SECTION

318 CELL-SPECIFIC REFERENCE SIGNAL GENERATING SECTION

312 313

CC#M

EP 2 830 377 A1

30

FIG.15

<div align="center">

**INTERNATIONAL SEARCH REPORT**

</div>

| | International application No. |
|---|---|
| | PCT/JP2013/057695 |

**A. CLASSIFICATION OF SUBJECT MATTER**
*H04W72/04(2009.01)i, H04W72/12(2009.01)i*

According to International Patent Classification (IPC) or to both national classification and IPC

**B. FIELDS SEARCHED**

Minimum documentation searched (classification system followed by classification symbols)
*H04W4/00-99/00*

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | Samsung, HARQ-ACK Transmission in Response to E-PDCCH Detection, 3GPP TSG RAN WG1 Meeting #68, R1-120193, 2012.02.10 entire text, all drawings | 1,2,6-8<br>3-5 |
| X | Alcatel-Lucent Shanghai Bell, Alcatel-Lucent, PUCCH resource mapping with ePDCCH, 3GPP TSG RAN WG1 Meeting #67, R1-114066, 2011.11.08 entire text, all drawings | 1,2,6-8 |
| Y | JP 2011-41193 A  (KDDI Corp.), 24 February 2011 (24.02.2011), paragraph [0030] (Family: none) | 3 |

☒ Further documents are listed in the continuation of Box C.          ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 April, 2013 (10.04.13) | 23 April, 2013 (23.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/057695 |

C (Continuation).    DOCUMENTS CONSIDERED TO BE RELEVANT

| Category* | Citation of document, with indication, where appropriate, of the relevant passages | Relevant to claim No. |
|---|---|---|
| Y | Alcatel-Lucent, Alcatel-Lucent Shanghai Bell, Further details of ePDCCH UE-specific search space design, 3GPP TSG RAN WG1 Meeting #68, R1-120507, 2012.02.10 entire text, all drawings | 4,5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012062822 A

**Non-patent literature cited in the description**

- Requirements for Evolved UTRA and Evolved UTRAN. *3GPP TR 25.913*